# EUROPEAN PATENT APPLICATION

(11) **EP 2 886 171 A1**
(43) Date of publication of application: **24.06.2015**
(21) Application number: 13198221.7
(22) Date of filing: 18.12.2013
(51) Int. Cl.: A63F 13/213, A63F 13/26, A63F 13/30, A63F 13/20, A63F 13/86, A63F 13/5252

(54) **Cross-platform augmented reality experience**

(71) Applicant: Microsoft Technology Licensing, LLC, Redmond, WA 98052 (US)
(72) Inventor: Latta, Stephen, Redmond Washington 98052-6399 (US); McCulloch, Daniel, Redmond Washington 98052-6399 (US); Scott, Jason, Redmond Washington 98052-6399 (US); Geisner, Kevin, Redmond Washington 98052-6399 (US)
(74) Representative: Grünecker Patent- und Rechtsanwälte PartG mbB

(57) **Abstract**

A plurality of game sessions (101) are hosted at a server system (102). A first computing device (104) of a first user is joined (202) to a first multiplayer gaming session, the first computing device including (204) a see-through display (702). Augmentation information is sent (206) to the first computing device for the first multiplayer gaming session to provide (208) an augmented reality experience to the first user. A second computing device (112) of a second user is joined (212) to the first multiplayer gaming session. Experience information is sent (214) to the second computing device for the first multiplayer gaming session to provide (216) a cross-platform representation of the augmented reality experience to the second user.

## Description

### BACKGROUND

Massively multiplayer online games are frequently configured to operate on a single platform. Users typically participate in a massively multiplayer online game by selecting a server and viewing a virtual representation of the game on a stationary display, such as a high definition television.

### SUMMARY

Embodiments are disclosed herein for providing a cross-platform, augmented reality online experience in a computing system. For example, a server system may host a plurality of multiplayer gaming sessions and join computing devices to the multiplayer gaming sessions. The server system may provide augmentation information to see-through display devices and/or experience information to computing systems operating on different platforms from the see-through display devices. The see-through display devices may provide an augmented reality experience with the augmentation information. The computing systems operating on different platforms may provide a cross-platform representation of the augmented reality experience with the experience information.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 schematically shows an example communication diagram for an augmented reality massively multiplayer online gaming system including in accordance with an embodiment of the present disclosure.
FIG. 2 shows a method of hosting a plurality of multiplayer game sessions in accordance with an embodiment of the present disclosure.
FIG. 3 illustrates an unaltered view of a physical environment including participants of a multiplayer game session in accordance with an embodiment of the present disclosure.
FIG. 4 illustrates an example first-person view of an augmented reality experience for the physical environment depicted in FIG. 3.
FIG. 5 illustrates an example cross-platform representation of the augmented reality experience depicted in FIG. 4.
FIG. 6 shows a method of hosting a plurality of multiplayer game sessions in accordance with an embodiment of the present disclosure.
FIG. 7 schematically shows an example head-mounted display in accordance with an embodiment of the present disclosure.
FIG. 8 is an example computing system in accordance with an embodiment of the present disclosure.

### DETAILED DESCRIPTION

Massively multiplayer online games are often implemented as two- or three-dimensional virtual environments on a single platform, such as a gaming console, a personal computer, or a mobile computing device. Previous cross-platform massively multiplayer online games only utilize platforms with the same type of game display (e.g., two- or three-dimensional graphics and/or animations rendered and displayed on a conventional display, such as a television, computer monitor, and/or mobile phone screen. Accordingly, players are only able to participate in games with other players having platforms that utilize the same types of displays, thereby limiting the amount and variety of players encountered in such multiplayer online games. Thus, the disclosed embodiments are directed to a cross-platform, massively multiplayer online experience that allows users with augmented reality, see-through displays to participate in an augmented reality game. For example, as described in more detail below, users of a see-through display device may participate in an augmented reality experience. Users of a computing device operating on a different platform may participate in a cross-platform representation of the augmented reality experience. The cross-platform representation may thereby bring the appearance of the augmented reality experience to a user of a computing device that is typically incapable of providing such an augmented reality experience.

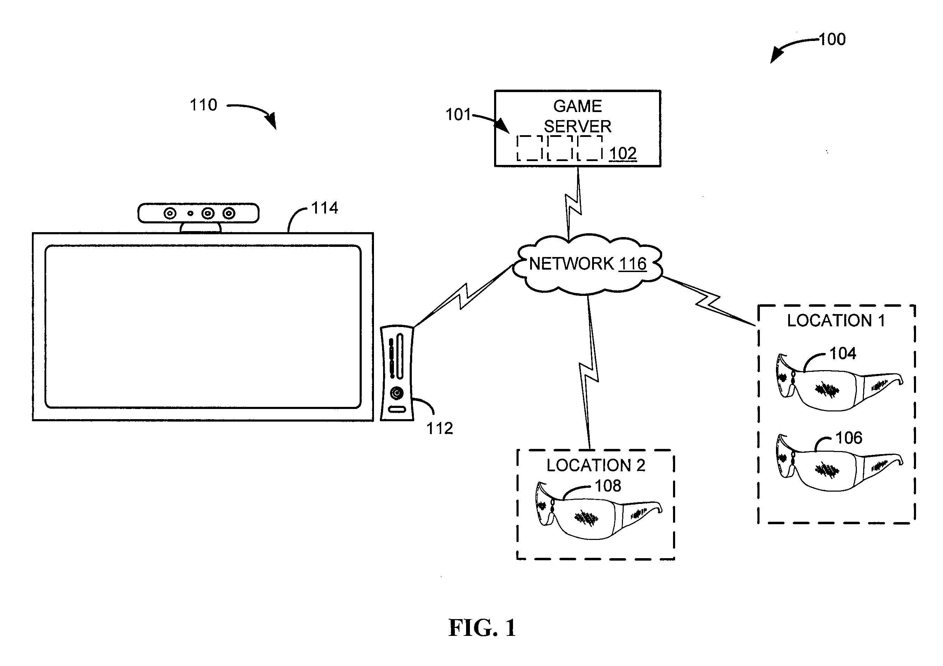

FIG. 1 schematically shows an example communication diagram of a cross-platform, augmented reality massively multiplayer online gaming system 100 including a plurality of multiplayer gaming sessions 101 hosted by a game server 102. Cross-platform, augmented reality massively multiplayer online gaming system 100 may accommodate a variety of cross-platform computing devices, such as see-through display devices, gaming systems connected to a stationary display device, personal computing devices connected to an external display device, mobile computing devices such as laptops, smart phones, tablets, etc. As shown in FIG. 1, augmented reality massively multiplayer online gaming system 100 may include see-through display devices 104, 106, and 108 and home entertainment system 110 including gaming system 112 connected to stationary display device 114. Each computing device may participate in a massively multiplayer online game by connecting to game server 102 through network 116 (e.g., the Internet).

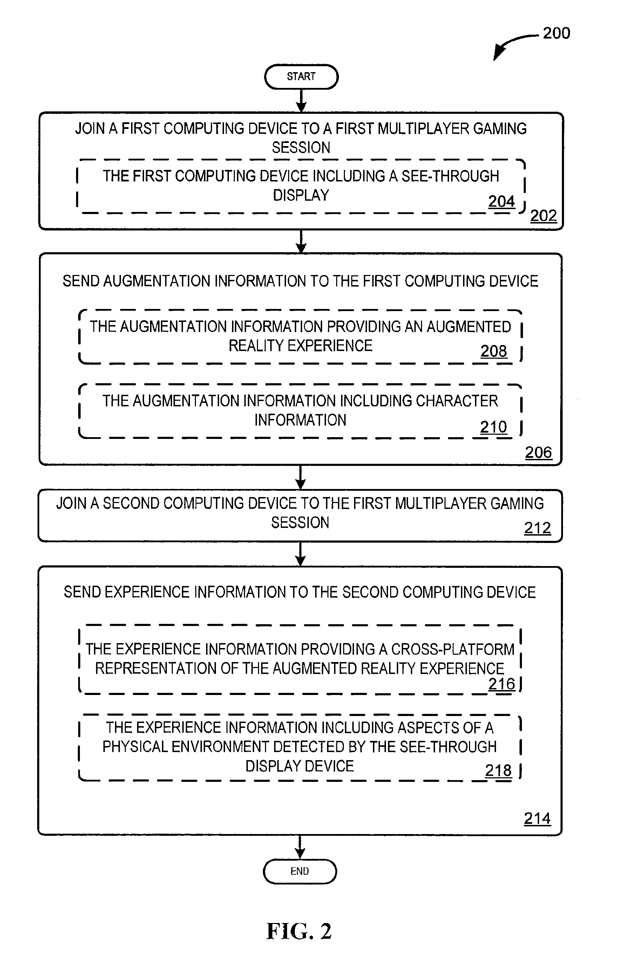

Turning now to FIG. 2, a method 200 of hosting a plurality of multiplayer gaming sessions is shown. For example, game server 102 of FIG. 1 may perform the steps of method 200 to host a plurality of cross-platform multiplayer gaming sessions. At 202, game server 102 joins a first computing device to a first multiplayer gaming session. In some embodiments, as shown at 204, the first computing device may include a see-through display. For example, the first computing device may correspond to see-through display device 104 of FIG. 1.

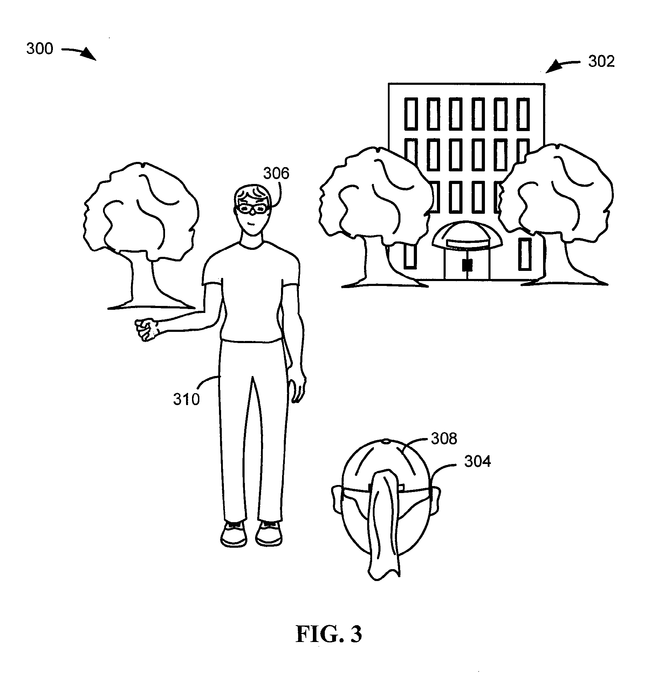

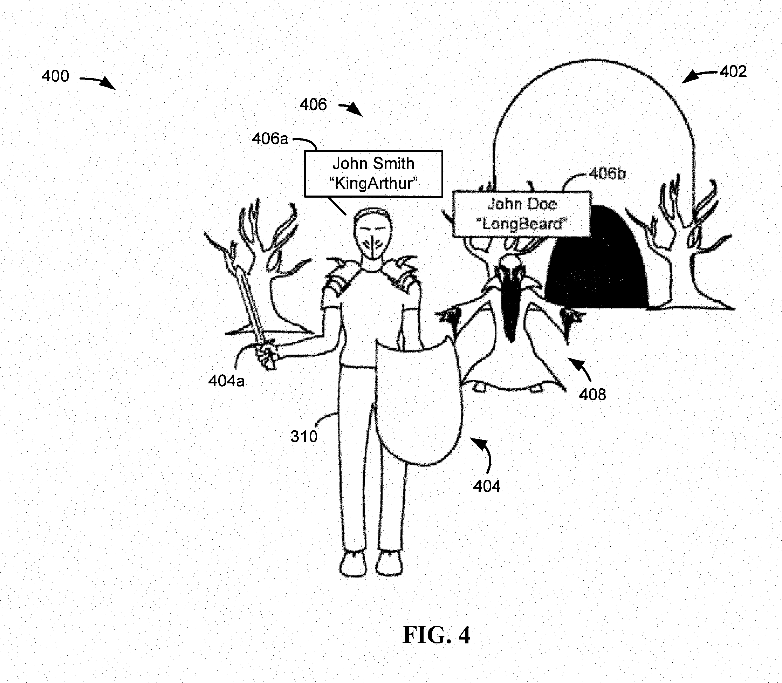

At 206, the game server sends augmentation information to the first computing device. In some embodiments, as shown at 208, the augmentation information may correspond to a virtual environment of the multiplayer gaming session. Augmentation information may include image data corresponding to the virtual environment or game space of the multiplayer gaming session and location information for placement of the image data. In some embodiments, the location information may be provided relative to other image data. For example, an augmentation for a tree may be described in relation to an augmentation for a building. In some embodiments, the location information may be provided relative to physical locations. For example, an augmentation for a tree may be described in relation to a location of the tree in the physical world. The see-through display device may display this augmentation at a particular location of the see-through display based on a known or detected location of the tree in the physical world. Thus, the see-through display of the first computing device may utilize the augmentation information to present an augmented reality experience by representing the multiplayer gaming session as an augmentation of the physical environment viewable through the see-through display. An illustration of an example augmented reality experience is shown in FIG. 3 and FIG. 4.

Turning first to FIG. 3, an example unaltered view of a physical environment 300 is shown. For example, physical environment 300 may include a plurality of real-world objects 302. Real-world objects may include virtually any object that exists in the real world, including, but not limited to, trees, buildings, landmarks, people, vehicles, etc. Physical environment 300 may also include a plurality of computing devices participating in a multiplayer gaming session, such as see-through display devices 304 and 306 controlled by a first user 308 and a second user 310, respectively. For example, see-through display devices 304 and 306 may correspond to see-through display devices 104 and 106 of FIG. 1 and physical environment 300 may correspond to Location 1 of FIG. 1.

FIG. 4 illustrates an example augmented reality experience for a multiplayer gaming session. Augmented view 400 of physical environment 300 is depicted as seen through see-through display device 304. Augmented view 400 may provide an augmented reality experience to user 308 by presenting an altered appearance of one or more objects in the real world when the objects are viewed through a see-through display. For example, see-through display device 304 may display virtual objects 402 as an augmentation of real-world objects 302 in order to provide an augmented reality environment corresponding to a multiplayer gaming session.

An appearance of user 310 may also be augmented to provide an augmented reality version of a character controlled by user 310. For example, sec-through display device 304 may display virtual character-based objects 404, such as armor and weaponry, in a location corresponding to relevant portions of user 310. As depicted, a virtual sword 404a may be displayed in a location corresponding to a right hand of user 310. Character-based items may include any suitable virtual item associated with a character and positioned on a see-through display to augment an appearance of a user.

As shown at 210 of FIG. 2, character information 406 may also be displayed near a location of a character presented in the augmented view. Character information may include virtually any information about a character and/or a user, such as character name, user name, stats, gear, contact information, etc. Character information may be displayed in any suitable format, such as text, icons, images, etc. In some embodiments, virtual items such as pets or companions belonging to a character of a user may be displayed near a location of the user. For example, character information 406a includes a user name and a character name corresponding to user 310 displayed as a popup above user 310.

Augmentations of real-world objects may be configured to hide associated real-world objects. In some embodiments, this may be achieved by obscuring an object with one or more images that depict a background. For example, a tree that appears in front of a portion of sky when viewed through a see-through display may be augmented by displaying an image of the sky in a location of the see-through display corresponding to the location of the tree. In this example, the augmented tree appears as sky when viewed through the see-through display, giving the illusion that the tree has disappeared.

An augmented view of a physical environment may also include virtual objects that do not directly correspond to a real-world object in the physical environment. For example, virtual character 408 may be displayed to represent a user of a remotely located computing device participating in the multiplayer gaming session. Character information 406 may also be displayed for virtual characters of remote users. For example, character information 406b is shown as a popup including a user name and a character name corresponding to a user represented by character 408.

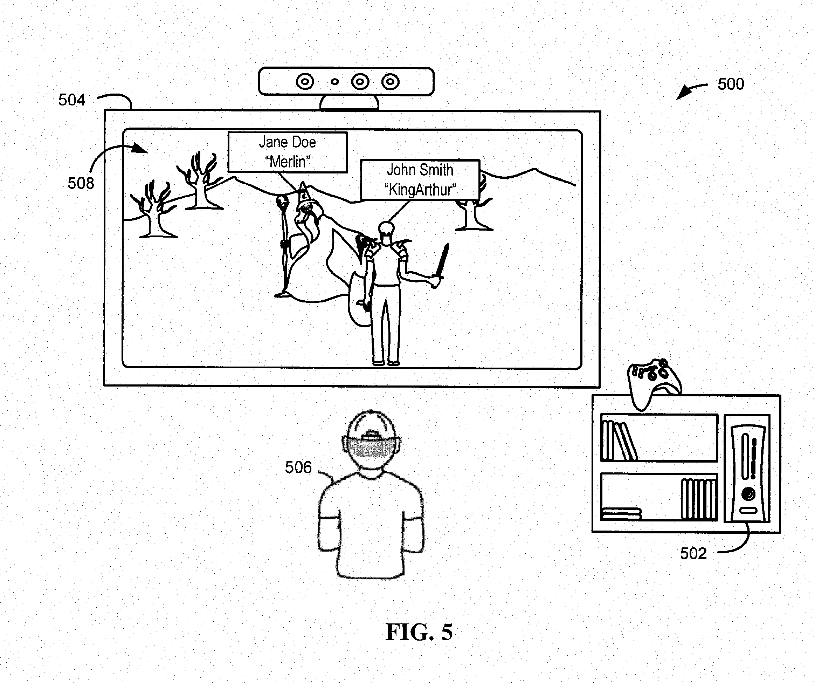

Turning back to FIG. 2, at 212 a second computing device is joined to the first multiplayer gaming session. In some embodiments, the second computing device may be remotely located and/or may operate on a different platform than the first computing device. At 214, the game server sends experience information to the second computing device. As shown at 216, the experience information may provide a cross-platform representation of the augmented reality experience provided to the first computing device. FIG. 5 illustrates an example cross-platform representation of the augmented reality experience depicted in FIG. 4.

Indoor environment 500 includes a gaming system 502 connected to a stationary external display device 504. For example, gaming system 502 and display device 504 may correspond to gaming system 112 and display device 114 of FIG. 1. Gaming system 502 may be joined to a multiplayer gaming session based on virtually any suitable criteria. In some embodiments, gaming system 502 may be joined to a multiplayer gaming session in response to a user 506 opting into and/or selecting the multiplayer gaming session. In other embodiments, gaming system 502 may be joined to a multiplayer gaming session automatically based on criteria such as location, session population, technical specifications of the gaming system, preference settings, and/or any other suitable criteria.

The multiplayer gaming session may be presented to user 506 by displaying experience 508 on display device 504 as a cross-platform representation of an augmented reality experience. For example, user 506 may see a virtual representation of the game space in which one or more other players with see-through display devices are participating in the multiplayer gaming session. FIG. 5 depicts a first person mode, in which display device 504 displays a virtual representation of users 308 and 310 from a first-person perspective of virtual character 408 shown in FIG. 4. In some embodiments, a third-person perspective may be used. For example, perspective may be dynamically altered, by selection or automatically, to show experience 508 in a third-person mode and/or from any other suitable perspective.

Experience 508 may be a cross-platform representation of the augmented reality experience that is configured for visual presentation via display device 504. For example, experience 508 may be presented in response to receiving experience information from a game server, such as game server 102. As shown at 218 of FIG. 2, experience information may include aspects of a physical environment corresponding to the multiplayer gaming session. Experience information may additionally or alternatively include augmentation information or a representation of augmentation information corresponding to a virtual environment of the multiplayer gaming session.

Aspects of the physical environment may be provided in any suitable manner and may include any information about the physical environment, such as topographical features, depth information of objects in the physical environment, landmark locations, transportation routes, time of day, weather conditions, etc. The aspects of the physical environment may be used to configure, alter, and/or enhance gameplay by incorporating the aspects and/or elements related to the aspects into the multiplayer gaming session. For example, gameplay may be different at night versus during the day. In some embodiments, the game server may store aspects of the physical environment, receive information about the physical environment from a third-party database, and/or receive information from participants of a multiplayer gaming session. For example, a see-through display device may detect aspects of the physical environment via one or more sensors of the see-through display device and send the detected aspects to the server and/or other computing devices participating in a multiplayer gaming session.

In some embodiments, the game server may identify all information relating to a game space for a multiplayer game session and configure the information for a particular platform. Game space information may describe a multiplayer gaming session by including information such as physical environment information and corresponding virtual environment information. For example, the game server may send experience information to a computing device, such as gaming system 502, in the form of a two- or three-dimensional representation of the game space, so that it may be displayed on display device 504. Thus, the cross-platform representation of an augmented reality experience may provide an experience corresponding to a multiplayer gaming session to a user having a different computing device than other users in the multiplayer gaming session.

The augmented reality experience and cross-platform representation of the augmented reality experience may allow a plurality of users of a plurality of computing devices operating on different platforms to participate in a multiplayer gaming session of a massively multiplayer online game. For example, a game space for a multiplayer gaming session may be provided to a see-through display device in a different manner than a gaming system. As discussed above, augmentation information may be provided to a see-through display device, such as see-through display device 304 of FIG. 3, while experience information may be provided to a computing device operating on a different, platform, such as gaming system 502 of FIG. 5. Accordingly, augmentation information may be a different data format, include different data structures, have different data sources, and/or differ in any suitable manner from experience information in order to configure the experience for presentation on a display device of a respective platform.

The computing devices may also perform cross-platform communication to provide a social aspect to the game. For example, communication information may be sent between a first and second computing device, such as see-through display device 104 and gaming system 112 of FIG. 1. Communication information may include text and/or speech input from the users of the computing devices. In some embodiments, the communication information may be sent directly between the computing devices, through a game server, and/or through any third-party computing device. The computing devices and/or the game server may include text-to-speech and/or speech-to-text conversion capabilities. Thus, speech output may be derived from text input and text output may be derived from speech input. For example, user 308 of FIG. 3 may provide a speech input to see-through display device 304 to communicate with user 506 of FIG. 5. In response, the see-through display device 304, game server 102, and/or gaming system 502 may convert the speech input to text output to be displayed on display device 504 depicted in FIG. 5. Communication may be provided between any group of computing devices, including a private conversation between selected computing devices, across an entire game session, across all game sessions, etc.

A user may provide user input to control an associated user character and/or to interact with the experience. For example, a user may provide user input in order to create, delete, and/or otherwise alter one or more elements within a multiplayer gaming session. User input may be detected by any suitable user input device or combination of input devices, such as gesture detection devices, microphones, inertial measurement units, etc. For example, user 308 of FIG. 3 may point at a target, such as virtual character 408 depicted in FIG. 4, and perform a gesture corresponding to an attack in order to control an associated character to attack the target. The gesture may be captured by one or more sensors of see-through display device 304, such as an image sensor, and matched to a corresponding command in order to cause the character associated with user 308 to perform the requested attack.

A user may also combine user input, for example, by pointing at a target and speaking an attack command in order to perform the associated attack on the target. For example, an inertial measurement unit connected to see-through display device 304 of FIG. 3 may detect a gesture from user 308 while a microphone of see-through display device 304 detects a voice command from user 308. User input may also allow a user to interact with menu items of an experience. For example, user 308 of FIG. 3 may point at a second user, such as user 506 of FIG. 5, or a virtual representation of a remote user, such as virtual character 408 of FIG. 4, to display additional information about the corresponding user and/or character.

In some embodiments, an experience may include a map of a multiplayer gaming session as an overlay and/or augmentation of a map of the physical environment associated with the multiplayer gaming session. For example, the map may provide a location of a representation of a user of a computing system that is dynamically updated to correspond to a current location of the computing system. Put another way, real world travel may be automatically updated in the experience. The map may provide a location of virtually any item of the experience and/or real world, such as locations of other users, quests, virtual objects, real-world objects, etc. In some embodiments, the map may be customizable by a user. For example, the map may be filtered to show only friends of the users, enemies, selected quests, etc. The map may be viewable when logged out of a multiplayer gaming session and/or game server. For example, a user may view the map to identify an in-game status of a physical location of the user.

A multiplayer gaming session may have features that are location-dependent. For example, a multiplayer gaming session may correspond to a particular region or regions of the real world. In some embodiments, quests or other in-game events may be tied to a real-world landmark, such that the in-game event is activated when a user is within a proximity threshold of the real-world landmark. In-game events may also be triggered when a number of users in a particular real-world location and/or virtual location within a multiplayer gaming session exceeds a threshold. In some embodiments, in-game events may be created, deleted, and/or otherwise altered by a user. For example, a user may create a virtual object to be placed within a gamespace of the multiplayer gaming session. In response to the creation of the virtual object, another user may receive a quest related to the virtual object. The created virtual object may remain and be viewed as part of the related quest.

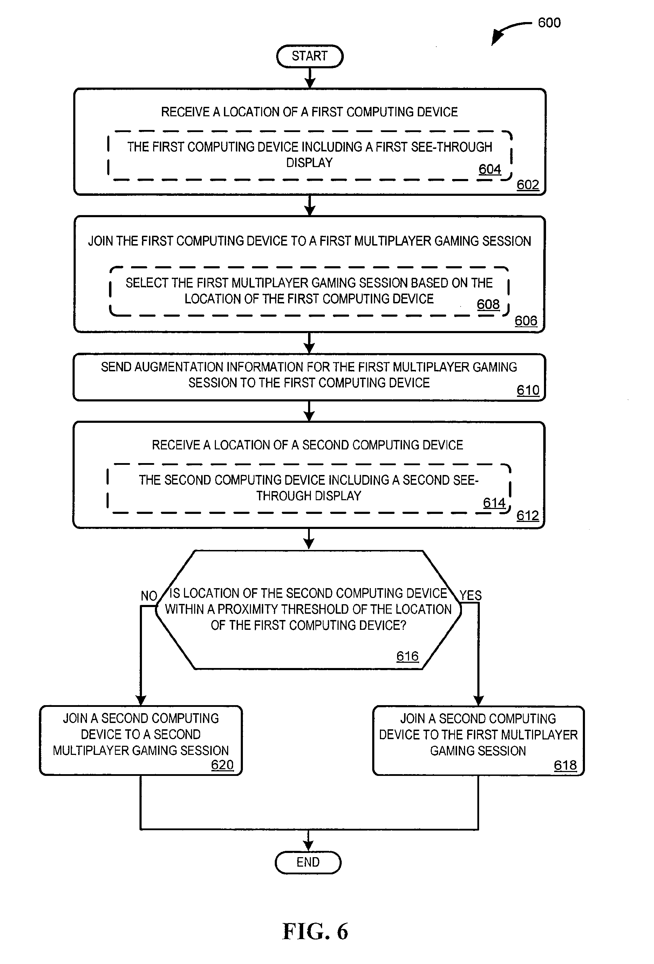

FIG. 6 shows an example method 600 of joining two computing devices to multiplayer gaming sessions based on the locations of the two computing devices. At 602, a game server, such as game server 102 of FIG. 1, may receive a location of a first computing device. As shown at 604, the first computing device may include a first see-through display, such as see-through display device 104 of FIG. 1. The location of a computing device may be determined in any suitable manner. For example, the location of the first computing device may be determined by detecting aspects of the physical environment via one or more sensors of the first computing device.

At 606, the first computing device is joined to a first multiplayer gaming session. As shown at 608, the first multiplayer gaming session may be selected based on the location of the first computing device. Virtually any suitable criteria related to location may direct the selection of a multiplayer gaming session as described at 608. For example, a plurality of multiplayer gaming sessions may each correspond to a different real-world region.

In some embodiments, a computing device may be placed in a multiplayer gaming session corresponding to a real-world region in which the computing device is located. In additional or alternative embodiments, location may be one of a plurality of criteria for selecting a multiplayer gaming session for a computing device. For example, a computing device may be joined to a multiplayer gaming session corresponding to the nearest real-world region that has a population above or below a population threshold. As another example, a computing device may be joined to a multiplayer gaming session corresponding to the nearest real-world region having one or more friends of a user of the computing device.

After joining the first multiplayer gaming session, augmentation information for the first multiplayer gaming session may be sent to the first computing device at 610. Such augmentation information may be used by the see-through display to augment the reality of the physical environment viewed through the see-through display.

At 612, the game server receives a location of a second computing device. As shown at 614, the second computing device may include a second see-through display, such as see-through display device 106 or 108 of FIG. 1. At 616, the game server determines whether the location of the second computing device is within a proximity threshold of the location of the first computing device. For example, the proximity threshold may defme a maximum and/or minimum distance between the first and second computing devices. As another example, the proximity threshold may defme a game boundary (e.g., downtown Seattle). In some embodiments, the proximity threshold may be one of a plurality of criteria for joining a second computing device to a multiplayer gaming session.

If the location of the second computing device is within a proximity threshold of the location of the first computing device, the game server joins the second computing device to the first multiplayer gaming session at 618. For example, the second computing device may correspond to see-through display device 106 of FIG. 1. The dashed box representing Location 1 may illustrate that see-through display devices 104 and 106 are within a proximity threshold of one another. Therefore, these devices may be joined to the same multiplayer gaming session.

Alternatively, if the location of the second computing device is not within a proximity threshold of the location of the first computing device, the game server joins the second computing device to a second multiplayer gaming session, different from the first multiplayer gaming session, at 620. In this example, the second computing device may correspond to see-through display device 108, which is at Location 2 in FIG. 1. As Location 2 may be considered to be outside of a proximity threshold of see-through display device 104, see-through display device 108 may be joined to a different multiplayer gaming session than see-through display device 104. For example, a first multiplayer gaming session may correspond to a first location (e.g., Seattle) and include quests tied to landmarks of the first location (e.g., taking pictures of specific Seattle landmarks). A second multiplayer gaming session may correspond to a second location (e.g., Portland) and include quests tied to landmarks of the second location (e.g., a scavenger hunt for virtual objects hidden near specific Portland landmarks).

In some embodiments, the second computing device may be joined to the first multiplayer gaming session if the second computing device moves to a location within the proximity threshold of the location of the first computing device. For example, the second computing device may log out of the game server and/or the second multiplayer gaming session and move to a new physical location within the proximity threshold of the first computing device. Upon logging back into the game server and/or the second multiplayer gaming session, the second computing device may be joined to the first multiplayer gaming session. In another example, the second computing device may move within the proximity threshold of the location of the first computing device without disconnecting from the multiplayer gaming session. In response, the second computing device may be automatically joined to the first multiplayer gaming session.

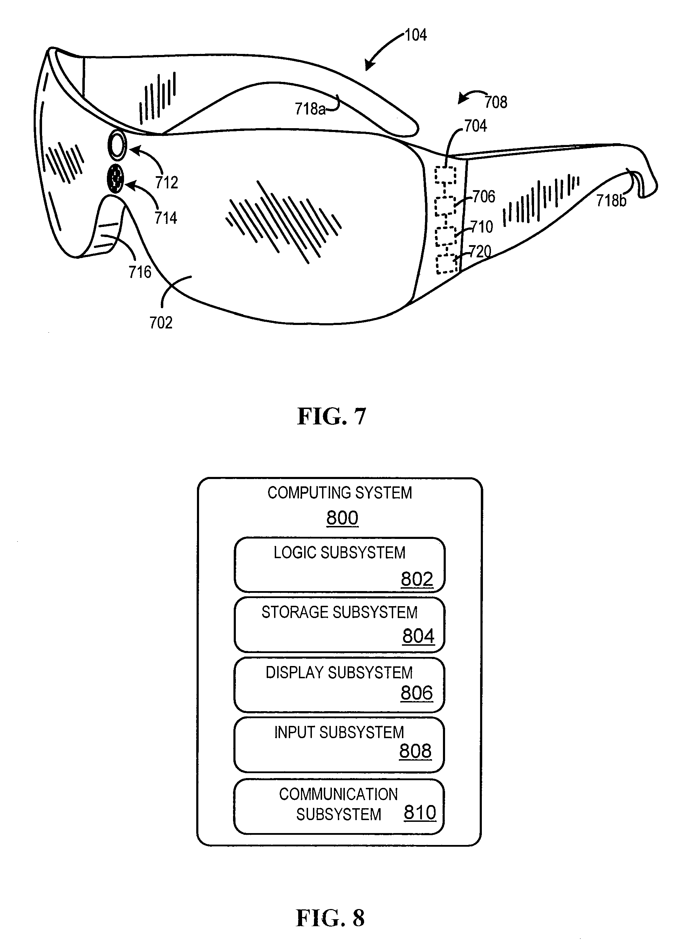

FIG. 7 shows a nonlimiting example of a see-through display device 104 including a see-through display 702. For example, see-through display device 104 may be a head-mounted see-through display device. In some embodiments, a see-through display device such as see-through display device 104 may be integrated as depicted in FIG. 7. In alternative embodiments, the see-through display device may be a modular computing system. The computing system may include a see-through display and one or more other components communicatively coupled to the see-through display.

See-through display 702 is at least partially transparent, thus allowing light to pass through the see-through display to the eyes of a user. Furthermore, the see-through display is configured to visually augment an appearance of a physical space to a user viewing the physical space through the see-through display. For example, the see-through display may display virtual objects that the user can see when the user looks through the see-through display. As such, the user is able to view the virtual objects that do not exist within the physical space at the same time that the user views the physical space. This creates the illusion that the virtual objects are part of the physical space.

See-through display device 104 also includes a virtual reality engine 704. The virtual reality engine 704 may be configured to cause the see-through display to visually present one or more virtual objects as an augmentation of real-world objects. The virtual objects can simulate the appearance of real world objects. To a user viewing the physical space through the see-through display, the virtual objects appear to be integrated with the physical space and/or with real-world objects. For example, the virtual objects and/or other images displayed via the see through display may be positioned relative to the eyes of a user such that the displayed virtual objects and/or images appear, to the user, to occupy particular locations within the physical space. In this way, the user is able to view objects that are not actually present in the physical space. Virtual reality engine may include software, hardware, firmware, or any combination thereof.

See-through display device 104 may include a speaker subsystem 706 and a sensor subsystem 708. The sensor subsystem may include a variety of different sensors in different embodiments. As nonlimiting examples, a sensor subsystem may include a microphone 710, one or more forward-facing (away from user) infrared and/or visible light cameras 712, and/or one or more rearward-facing (towards user) infrared and/or visible light cameras 714. The forward-facing camera(s) may include one or more depth cameras, and/or the rearward-facing cameras may include one or more eye-tracking cameras. In some embodiments, an onboard sensor subsystem may communicate with one or more off-board sensors that send observation information to the onboard sensor subsystem. For example, a depth camera used by a gaming console may send depth maps and/or modeled virtual skeletons to the sensor subsystem of the head-mounted display.

See-through display device 104 may also include one or more features that allow the see-through display device to be worn on the head of a user. In the illustrated example, see-through display device 104 takes the form of eye glasses and includes a nose rest 716 and ear rests 718a and 718b. In other embodiments, a head-mounted display may include a hat or helmet with an in-front-of-the-face see-through visor. Furthermore, while described in the context of a head-mounted see-through display, the concepts described herein may be applied to see-through displays that are not head mounted (e.g., a windshield) and to displays that are not see-through (e.g., an opaque display that renders real objects observed by a camera with virtual objects not within the camera's field of view).

See-through display device 104 may also include a communication subsystem 720. Communication subsystem 720 may be configured to communicate with one or more off-board computing devices. As an example, the communication subsystem may be configured to wirelessly receive a video stream, audio stream, coordinate information, virtual object descriptions, and/or other information to render augmentation information as an augmented reality experience.

In some embodiments, the methods and processes described above may be tied to a computing system of one or more computing devices. In particular, such methods and processes may be implemented as a computer-application program or service, an application-programming interface (API), a library, and/or other computer-program product.

FIG. 8 schematically shows a non-limiting embodiment of a computing system 800 that can enact one or more of the methods and processes described above. Computing system 800 is shown in simplified form. It will be understood that virtually any computer architecture may be used without departing from the scope of this disclosure. In different embodiments, computing system 800 may take the form of a head-mounted see-through display device (e.g., see-through display device 104), gaming device (e.g., gaming system 502), mobile computing device, mobile communication device (e.g., smart phone), desktop computer, laptop computer, tablet computer, home-entertainment computer, network computing device, mainframe computer, server computer, etc.

Computing system 800 includes a logic subsystem 802 and a storage subsystem 804. Computing system 800 may optionally include a display subsystem 806 (e.g., a see-through display), input subsystem 808, communication subsystem 810, and/or other components not shown in FIG. 8.

Logic subsystem 802 includes one or more physical devices configured to execute instructions. For example, the logic subsystem may be configured to execute instructions that are part of one or more applications, services, programs, routines, libraries, objects, components, data structures, or other logical constructs. Such instructions may be implemented to perform a task, implement a data type, transform the state of one or more components, or otherwise arrive at a desired result.

The logic subsystem may include one or more processors configured to execute software instructions. Additionally or alternatively, the logic subsystem may include one or more hardware or firmware logic machines configured to execute hardware or firmware instructions. The processors of the logic subsystem may be single-core or multi-core, and the programs executed thereon may be configured for sequential, parallel or distributed processing. The logic subsystem may optionally include individual components that are distributed among two or more devices, which can be remotely located and/or configured for coordinated processing. Aspects of the logic subsystem may be virtualized and executed by remotely accessible, networked computing devices configured in a cloud-computing configuration.

Storage subsystem 804 includes one or more physical, non-transitory, devices configured to hold data and/or instructions executable by the logic subsystem to implement the methods and processes described herein. When such methods and processes are implemented, the state of storage subsystem 804 may be transformed-e.g., to hold different data.

Storage subsystem 804 may include removable media and/or built-in devices. Storage subsystem 804 may include optical memory devices (e.g., CD, DVD, HD-DVD, Blu-Ray Disc, etc.), semiconductor memory devices (e.g., RAM, EPROM, EEPROM, etc.) and/or magnetic memory devices (e.g., hard-disk drive, floppy-disk drive, tape drive, MRAM, etc.), among others. Storage subsystem 804 may include volatile, nonvolatile, dynamic, static, read/write, read-only, random-access, sequential-access, location-addressable, file-addressable, and/or content-addressable devices.

It will be appreciated that storage subsystem 804 includes one or more physical, non-transitory devices. However, in some embodiments, aspects of the instructions described herein may be propagated in a transitory fashion by a pure signal (e.g., an electromagnetic signal, an optical signal, etc.) that is not held by a physical device for a finite duration. Furthermore, data and/or other forms of information pertaining to the present disclosure may be propagated by a pure signal.

In some embodiments, aspects of logic subsystem 802 and of storage subsystem 804 may be integrated together into one or more hardware-logic components through which the functionally described herein may be enacted. Such hardware-logic components may include field-programmable gate arrays (FPGAs), program- and application-specific integrated circuits (PASIC / ASICs), program- and application-specific standard products (PSSP / ASSPs), system-on-a-chip (SOC) systems, and complex programmable logic devices (CPLDs), for example.

The terms "program" and "engine" may be used to describe an aspect of computing system 800 implemented to perform a particular function. In some cases, program or engine may be instantiated via logic subsystem 802 executing instructions held by storage subsystem 804. It will be understood that different programs and/or engines may be instantiated from the same application, service, code block, object, library, routine, API, function, etc. Likewise, the same program and/or engine may be instantiated by different applications, services, code blocks, objects, routines, APIs, functions, etc. The terms "program" and "engine" may encompass individual or groups of executable files, data files, libraries, drivers, scripts, database records, etc.

It will be appreciated that a "service", as used herein, is an application program executable across multiple user sessions. A service may be available to one or more system components, programs, and/or other services. In some implementations, a service may run on one or more server-computing devices.

When included, display subsystem 806 may be used to present a visual representation of data held by storage subsystem 804. This visual representation may take the form of images that appear to augment a physical space, thus creating the illusion of an augmented reality. As the herein described methods and processes change the data held by the storage subsystem, and thus transform the state of the storage subsystem, the state of display subsystem 806 may likewise be transformed to visually represent changes in the underlying data. Display subsystem 806 may include one or more display devices utilizing virtually any type of technology. Such display devices may be combined with logic subsystem 802 and/or storage subsystem 804 in a shared enclosure (e.g., a head-mounted display), or such display devices may be peripheral display devices.

When included, input subsystem 808 may comprise or interface with one or more user-input devices such as a game controller, gesture input detection device, voice recognizer, inertial measurement unit, keyboard, mouse, or touch screen. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 810 may be configured to communicatively couple computing system 800 with one or more other computing devices. Communication subsystem 810 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 800 to send and/or receive messages to and/or from other devices via a network such as the Internet.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and nonobvious combinations and subcombinations of the various processes, systems and configurations, and other features, functions, acts, and/or properties disclosed herein, as well as any and all equivalents thereof.

## Claims

1. A method (200) for hosting a plurality of game sessions (101) at a server system (102), the method comprising:
joining (202) a first computing device (104) of a first user to a first multiplayer gaming session, the first computing device including (204) a see-through display (702);
sending (206) augmentation information to the first computing device for the first multi-player gaming session to provide (208) an augmented reality experience to the first user;
joining (212) a second computing device (112) of a second user to the first multiplayer gaming session; and
sending (214) experience information to the second computing device for the first multi-player gaming session to provide (216) a cross-platform representation of the augmented reality experience to the second user.

2. The method of claim 1, wherein the cross-platform representation of the augmented real-ity experience is configured for visual presentation via a display device connected to the second computing device.

3. The method according to one of claims 1 - 2, wherein the experience information includes aspects of a physical environment detected by the see-through display.

4. The method according to one of claims 1 - 3, wherein the augmentation information includes character information that augments an appearance of a third user when the third user is viewed through the see-through display.

5. The method according to one of claims 1 - 4, wherein the augmented reality experience includes an in-game event that is activated when the first computing device is within a proximity threshold of a real-world landmark.

6. A computing system (104) for participating in a multiplayer game, the computing system comprising:
a see-through display (702);
one or more sensors (708);
a logic subsystem (802);
a storage subsystem (804) configured to store instructions that, when executed, cause the computing system to:
determine a location of the computing system;
send the location of the computing system to a game server;
receive augmentation information from the game server for a first multiplayer gaming session, the first multiplayer gaming session corresponding to the location of the computing system;
present (208), on the see-through display, an augmented reality experience with the augmentation information, the augmented reality experience representing the multiplayer gaming session as an augmentation of a physical environment viewable through the see-through display;
detect (218) aspects of the physical environment via the one or more sensors; and
send experience information corresponding to the detected aspects of the physical environment to the game server to provide (216) a cross-platform representation of the augmented reality experience to one or more remote computing devices participating in the first multiplayer gaming session.

7. The computing system of claim 6, wherein the cross-platform representation of the augmented reality experience is configured for visual presentation via a display device connected to the one more remote computing devices.

8. The computing system according to one of claims 6 - 7, wherein the location of the computing system is determined by detecting aspects of the physical environment of the computing system via the one or more sensors.

9. The computing system according to one of claims 6 - 8, wherein the first multiplayer gaming session is one of a plurality of multiplayer gaming sessions, each of the plurality of multiplayer gaming sessions corresponding to a different real world region.

10. The computing system according to one of claims 6 - 9, wherein the instructions, when executed, further cause the system to display, on the see-through display, character information as an augmentation of a user participating in the multiplayer gaming session when the user is viewed through the see-through display.
